**Europäisches Patentamt**

**European Patent Office**

**Office européen des brevets**

(19)

(11) **EP 1 004 895 B1**

(12) **EUROPÄISCHE PATENTSCHRIFT**

(45) Veröffentlichungstag und Bekanntmachung des Hinweises auf die Patenterteilung:
**26.02.2003 Patentblatt 2003/09**

(51) Int Cl.⁷: $G01S\ 13/90$, $H01Q\ 1/28$

(21) Anmeldenummer: **99122251.4**

(22) Anmeldetag: **08.11.1999**

(54) **Verfahren zur Verringerung des Rechenaufwandes und Einrichtung zur Durchführung desselben in einem ROSAR-System**

Method and apparatus for improving the computational efficiency of a rosar-system

Procédé et dispositif d'amélioration de l'efficacité computationnelle dans un système de rosar

(84) Benannte Vertragsstaaten:
**AT BE CH CY DE DK ES FI FR GB GR IE IT LI LU MC NL PT SE**

(30) Priorität: **11.11.1998 DE 19851910**

(43) Veröffentlichungstag der Anmeldung:
**31.05.2000 Patentblatt 2000/22**

(73) Patentinhaber: **EADS Deutschland GmbH 81663 München (DE)**

(72) Erfinder:
• **Kaltschmidt, Horst, Prof. Dr. 85579 Neubiberg (DE)**

• **Klausing, Helmut, Dr.-Ing. 82234 Wessling-Hochstadt (DE)**

(74) Vertreter: **Meel, Thomas et al Patentassessor, c/o Dornier GmbH L H G 88039 Friedrichshafen (DE)**

(56) Entgegenhaltungen:
**DE-A- 4 306 920   DE-C- 3 922 086
DE-C- 4 323 511   US-A- 3 611 376**

EP 1 004 895 B1

## Beschreibung

Die Erfindung bezieht sich auf ein Verfahren für ein Radarsystem mit synthetischer Apertur durch rotierende Antennen gemäß dem Oberbegriff des Anspruchs. 1 und einer Einrichtung zur Durchführung desselben nach Anspruch 4.

Das unter anderem durch die DE 39 22 086 C1 bekanntgewordene ROSAR-Prinzip erfordert eine ideale Kreisbewegung der rotierenden Antennen, die durch ein zusätzlich zu den Hubschrauberrotoren angebrachtes Antennen tragendes Drehkreuz erreichbar ist, oder im Falle der rotormontierten Antennen einen Kinematiksensor, der die Abweichungen von den idealen Kreisbewegungen feststellt und dem ROSAR-Prozessor diese als Korrekturmeßsignale zuführt.

Das dem Stand der Technik zugrunde gelegte System ist in der Dissertation Klausing, Kapitel 3 "ROSAR-Theorie", S. 27 bis S. 64 und in den Druckschriften DE 39 22 086 C1, DE 43 23 511 C1 sowie DE 43 06 920 C2 eingehend beschrieben. Gemäß Fig. 6 errechnet Klausing die Referenzfunktion für den störungsfreien Fall - d.h. für die vier zeitlich konstanten die Referenzfünktion bestimmenden ROSAR-Kenngrößen die maximale Lateralauflösung. Diese ROSAR-Kenngrößen sind:

1. Länge des Rotorblatts bzw. die Entfernung der Antenne zum Drehpunkt (L),
2. die Kreisfrequenz des Rotorblatts $\omega_0$ ,
3. die Entfernung zwischen Objekt und Drehpunkt ($R_{GO}$) und
4. der Höhe der Antenne über dem Boden $H_0$.

Falls nun die vier ROSAR-Kenngrößen stochastisch schwanken - und das tun sie in der Praxis weitgehend - wird die Auflösung erheblich unter der störungsfreien Maximalauflösung liegen, so daß eine Defokussierung eintritt. Die bisher bekannten Vorschläge zur Messung der vier angegebenen Kenngrößen erfordern einen viel zu hohen technischen und rechenmäßigen Aufwand.

Der vorliegenden Erfindung liegt die Aufgabe zugrunde, das bisherige ROSAR-System in seinem Aufwand, insbesondere was den Rechenaufand betrifft, wesentlich zu minimieren und ein selbstfokussierendes Verfahren vorzuschlagen.

Diese Aufgabe wird durch die im Anspruch 1 aufgezeigten Maßnahmen gelöst. In den Unteransprüchen sind Weiterbildungen und Ausgestaltungen angegeben. In der nachfolgenden Beschreibung werden Ausführungsbeispiele erläutert. Die Figuren der Zeichnung ergänzen diese Erläuterungen. Es zeigen:

Fig. 1: ein Ausführungsbeispiel eines selbstfokussierenden ROSAR-Systems (SFR) in schematischer Darstellung,

Fig. 2: ein Ausführungsbeispiel für eine Empfangssignalabtastung und Verteilung auf die Entfemungs-Ringspeicher und ihre Speicherplätze,

Fig. 3: ein Schemabild bezüglich einer Korrelatoranordnung mit dem 1. Schritt des SFR,

Fig. 4: eine Darstellung des Vorgehens zum Auffinden des Prtifkriteriums,

Fig. 5: ein Schemabild bezüglich einer typischen Ortskurve der Abweichung einer Blattspitzenbewegung von einer idealen Kreisbahn,

Fig. 6: eine geometrische Darstellung zur Berechnung der ROSAR-Referenzfunktion dem Stand der Technik gemäß Dr. Klausing.

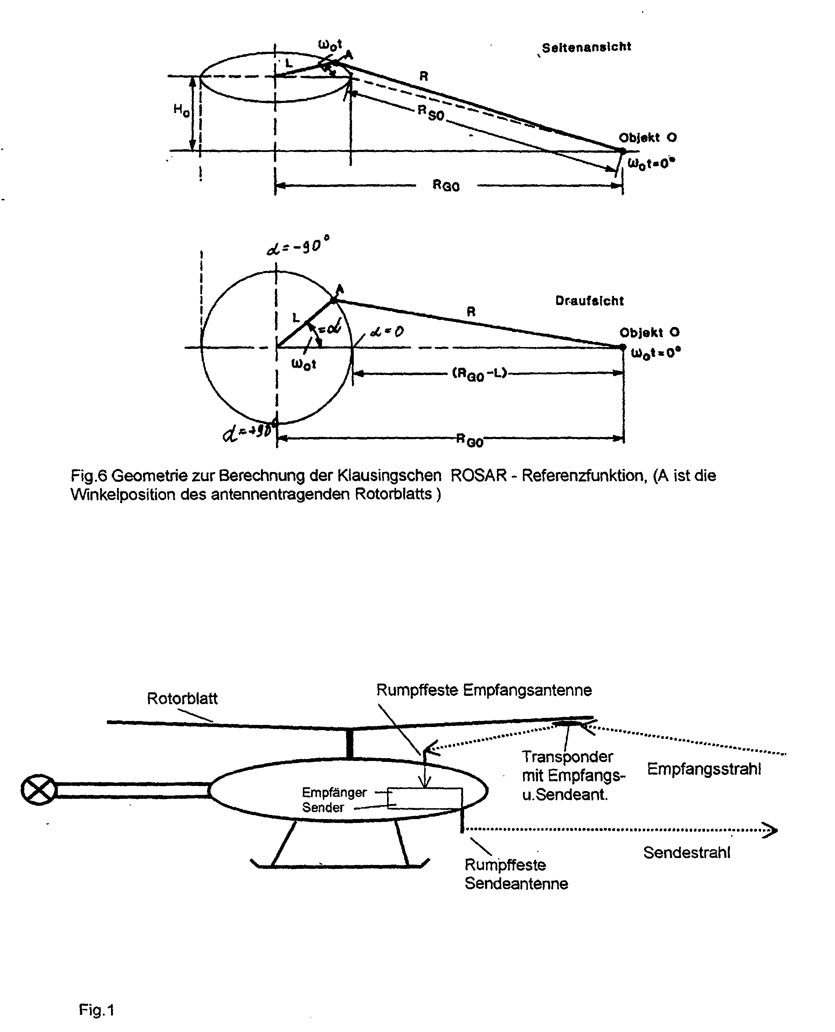

Der allgemeine Erfindungsgedanke sieht vor, daß bei dem vorgeschlagenen selbstfokussierenden Verfahren nur die Empfangsantenne auf dem Rotorblatt angeordnet ist, das Sendesignal jedoch von einer fest am Rumpf des Hubschraubers befestigten Antenne abgestrahlt wird. Es wird also nur das Empfangssignal von einer in der Nähe der Rotorblattspitze montierten Antenne empfangen. Dies erbringt den Vorteil, daß die Sendeleistung nicht über eine Drehkupplung geführt werden muß. Wie die Fig. 1 veranschaulicht, wird nunmehr die in der Nähe der Blattspitze angebrachte Antenne mit einer Transpondereinheit verbunden, die das Empfangs- Signal in ein geeignetes Frequenzband umsetzt und dieses umgesetzte Signal drahtlos an den rumpffesten Empfänger sendet. Die Transponderkarte ist vorteilhaft als Elektronikkarte, insbesondere als flache Elektronikkarte, ausgebildet und/oder ist mit einer autonomen Energieversorgungseinheit ausgerüstet. Die Primärenergie für die Transponderkarte wird dabei aus der über die Elektronikkarte gleitende Luftströmung entnommen. in einer weiteren vorteilhaften Ausführungsform sind in der Elektronikkarte des Transponders Kanäle ausgeführt, in denen Mini-Turbinengeneratorsätze zur Energiegewinnung integriert sind.

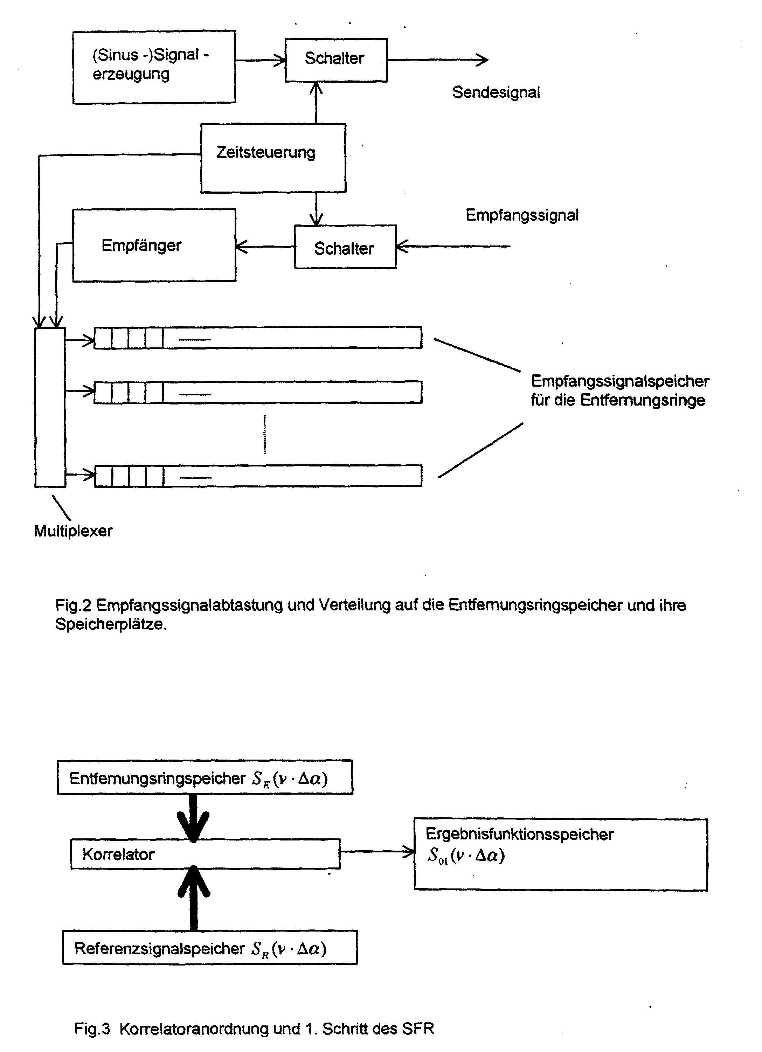

Das in den Fig. 1 und 2 skizzierte Ausführungsbeispiel einer Radaranordnung für die Realisie- rung des selbstfokussierenden Verfahrens (SFR) wird pulsfrequent betrieben. Hier ist anzuführen, daß selbstverständlich auch Radarverfahren - die beispielsweise mit frequenz- oder pseudorauschmodulierten Sendesginalen arbeiten - z.B. FM/CW verwendbar sind. Bei der Rotorposition $\alpha = -90°$ wird vom am Rumpf befestigten Sender (Öffnungswinkel $\gamma$ der Sendeantenne = beispielsweise 180°) ein kurzer Sendeimpuls (Sinussignal der Wellenlänge $\lambda$, Impulsdauer $T_s$ ) abgestrahlt und danach erfolgt eine Sendepause der Dauer $T_{SP}$. Während dieser Sendepause wird der Empfänger eingeschaltet.

Der Empfänger nimmt nun aus den verschiedenen Entfernungsringen zeitlich nacheinander Empfangssignale auf, die über einen Multiplexer (Fig. 2) auf die zugehörigen Entfernungsringspeicherplätze verteilt werden. Nachdem die Empfangssignale in 1- und Q-Signale umgewandelt worden sind, sind diese nur noch eine Funktion des Rotordrehwinkels $\alpha$. Für jede Winkelposition $\nu \cdot \Delta\alpha$ des Rotors werden dabei die Speicheranordnungen (Fig. 2) spaltenweise gefüllt. Für einen bestimmten Entfernungsring im Abstand $R_{GO}$ muß also jeweils nach der Laufzeit $\tau = 2R_{GO} / c$ der Echoimpuls empfangen und abgespeichert werden. Zwischen 2 Echoimpulsen hat sich dann der Rotor um $\Delta\alpha = \omega_0 \cdot t$ weitergedreht, d.h. es steht am Ende einer vollen Rotordrehung ein Empfangs-Entfernungssignal der Form

$$S_E (\nu . \Delta\alpha.)$$

zur Verfügung. Wie in Fig. 3 veranschaulicht wird dann dieses Empfangssignal mit der Referenzfunktion

$$S_R (\nu . \Delta\alpha.)$$

kreuzkorreliert und somit die Ergebnisfunktion $S_0(\alpha)$ erhalten ( siehe Dissertation Klausing, DE 39 22 086 C1, DE 43 23 511 C1). Bei dem hier vorgeschlagenen selbstfokussierenden Verfahren (SFR) dient das bekannte Rechenberg'sche Optimiefungsverfahren als Grundlage, bei dem das biologische Darwin'sche Prinzip der "Mutation und Selektion" auf ein technisches Optimierungsverfahren übertragen wird:

In einem ersten Verfahrensschritt (Fig. 3) wird das aus einem Kreisring stammende Empfangssignal

$$S_E (\nu \bullet \Delta\alpha)$$

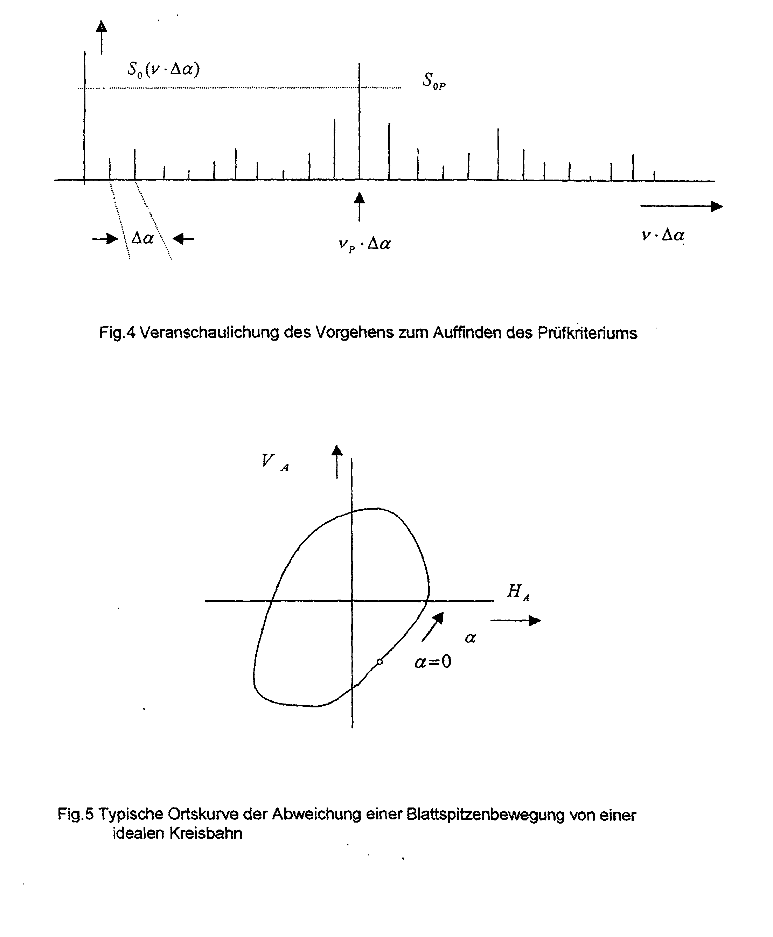

mit der Referenzfunktion des ungestörten Falles, also mit festen winkelunabhängigen Werten für $L_1$, $\omega_{01}$, $R_{G01}$ und $H_{01}$, kreuzkorreliert. Die so erhaltene - als Ergebnisfunktion $S_0 (\nu.\alpha)$ bezeichnete - Kreuzkorrelationsfunktion wird auf Maxima abgesucht und deren Breite bestimmt, wie beispielsweise die 3 dB - Breite. Dasjenige Maximum mit der geringsten Breite ist das Prüfkriterium in der Ergebnisfunktion an der Stelle $\alpha_P = \nu_P \bullet \Delta\alpha$ zur Bewertung der nachfolgenden Schritte (Fig. 4). Eine weitere Ausgestaltung sieht die Benutzung des Höhen-Breitenverhältnisses als weitere Prüfgröße vor.

Wie aus der Fig. 4 ersichtlich, ist der 2. Schritt gegenüber dem 1. Schritt dadurch verändert, daß nun die Referenzfunktion nicht mehr aus dem ungestörten Fall berechnet wird, sondern daß für jeden Abtastwert an der Stelle $\nu \bullet \Delta\alpha$ die vier Kenngrößen gemäß dem "Rechenberg-Verfahren" neu berechnet werden. Dabei wird ein Zufallswert aus einer Wahrscheinlichkeitsverteilung mit vorgegebenem Mittelwert $\mu$ und der Streuung $\sigma$ gezogen. Beispielsweise wird der Zufallswert für die Rotorlänge L aus einer Gleich- oder einer Gaußverteilung mit dem Mittelwert $\mu_L = L$ (ungestörter Fall) und einer

festzulegenden Streuung $\sigma_L$ (z.B. $\sigma_L = 0.1L$) festgelegt. Die Referenzfunktion des 2. Schrittes ist dann eine Abtastfunktion $S_R (\nu.\Delta\alpha_A)$ mit winkelabhängigen zufälligen Werten für $L = L(\nu \bullet \Delta\alpha)$. Mit der so ermittelten Referenzfunktion wird das im Schritt 1 empfangene Signalgemisch kreuzkorreliert und die so erhaltene Ergebnisfinktion an der Stelle $\nu_P = \nu_P \bullet \Delta\alpha$ mit dem aus Schritt 1 ermittelten Maximum verglichen. Beispielsweise wird das Höhen-Breitenverhältnis (HBV2) aus Schritt 2 mit demjenigen aus Schritt 1 (HBV1) verglichen. Es können nun zwei Fälle auftreten:

1.) $HBV2 \leq HBV1$

2.) $HBV2 \geq HBV1$

Tritt Fall 1 auf, so wird Schritt 2 so oft wiederholt bis sich Fall 2 einstellt. Sobald aber nun Fall 2 auftritt, erfolgt ein 3. Schritt (gemäß dem Rechenberg-Verfahren). Hierbei verfährt man wie im Schritt 2, zieht also wieder Zufallswerte für alle Abtastzeitpunkte für die vier ROSAR-Kenngrößen, jedoch mit dem Unterschied, daß für den Mittelwert, der für eine Ziehung zugrunde gelegt wird, der im Schritt 2 gezogene Zufallswert eingesetzt wird. Dann wird wieder gemäß Schritt 2 kreuzkorreliert und wieder an der Prüfstelle $\alpha_P$ das Höhen-Breitenverhältnis (HBV3) ermittelt.

Folgende Ergebnisse treten hierbei auf:

Für den Fall 1: $HBV3 \geq HBV2$, in diesem Fall werden die im Schritt 3 gezogenen Zufallswerte für die vier Kenngrößen "vergessen" und man beginnt wieder mit Schritt 2. In der Biologie entspricht dies dem Phänomen, daß eine Spezies nicht lebensfähig war und deshalb untergeht.

Für den Fall 2: $HBV3 \geq HBV2$, in diesem Fall wird sinngemäß wie im Fall 2 des Schrittes 2 verfahren, d.h. für den nun folgenden Schritt 4 werden als Mittelwerte die im Schritt 3 gezogenen Abtastwerte eingesetzt. Das beschriebene Verfahren wird solange fortgesetzt, bis ein festgelegter Prozentsatz - beispielsweise 90% - der theoretisch erreichbaren Maximalauflösung erreicht ist.

Ein Ausführungsbeispiel des vorbeschriebenen Verfahrens sieht zur Erreichung einer schnelleren Konvergenz und damit einer weiteren Minimierung des Rechenaufwandes des selbstfokussierenden ROSAR-Verfahrens vor, die für die Zufallsziehung der Abtastwerte der Bewegungsgrößen maßgeblichen Streuungen am erreichten Erfolg (HBV) zu orientieren, beziehungsweise die Streuungen um so kleiner zu wählen, je größer das erreichte HBV ist. Dadurch werden unrealistische Abweichungen vermieden, was automatisch zur Einsparungen von Verfahrensschritten führt.

Ein weiteres Ausführungsbeispiel sieht ein niodellgestütztes Vorgehen bei der Ermittlung der zeitveränderlichen Abtastwerte vor:

bei einem Hubschrauber läßt sich die Abweichung der Blattspitzenbewegungen von einer idealen Kreisbewegung, - d.h. die Kreisbahn liegt in einer Ebene und eine konstante Winkelgeschwindigkeit ist gegeben - durch eine sogenannte Ortskurve in einem Horizontal-Vertikal-Koordinatensystem darstellen, wie in Fig. 5 dargestellt ist. Hier ist eine typische Ortskurve für die von einer idealen Kreisbewegung abweichende Blattspitzenbewegung bei einem Hubschrauber veranschaulicht, wobei $H_A$ die Abweichung von der Horizontalen und $V_A$ die Vertikalabweichung ist. In dieser Darstellung wäre die Ortskurve für eine ideale Kreisbewegung ein Punkt im Koordinatenursprung. Abweichungen von der konstanten Kreisfrequenz der Rotorkreisbewegung haben auf der Horizontalachse und Abweichungen von der Höhe - gegeben durch den Höhenschlag des Rotorblattes - Werte auf der Vertikalachse zur Folge.

Wenn man die Blattspitzenbewegungen eines Hubschraubers für bestimmte Flugzustände vermißt, so stellt man folgendes fest:

1.) Es existiert eine geschlossene Ortskurve, d.h. der Vorgang ist periodisch (mit der Rotorumlaufperiode) und begrenzt, also gibt es abschätzbare Maximalabweichungen.

2.) Die Ortskurve verläuft verhältnismäßig glatt, verursacht durch den Tiefpaßcharakter des Bewegungssystems. (die mechanische Grenzfrequenz f weist nur einige Hz auf).

Dieses Modellwissen kann man nun sich auf mehrfache Weise zunutze machen:

Wegen der Tiefpaßcharakteristik des Bewegungsvorganges muß nicht für jeden Abtastwinkel $\nu \cdot \Delta\alpha$ ein neuer Zufallswert gezogen werden. Es reicht - gemäß dem Abtasttheorem - größere Winkelintervalle zuzulassen und für alle Winkelabtastpunkte dazwischen die 4 Kenngrößen konstant zu belassen.

Es ist davon auszugehen, daß ein für einen Flugzustand ermittelter Abweichungsverlauf für längere Zeit konstant bleibt, wenn man einmal von heftigen Böen absieht absieht. Vor diesem Hintergrund schlägt nun die Erfindung weiterhin vor, daß für die wichtigsten Flugzustände "auf Vorrat" die Referenzfunktionen nach dem beschriebenen Evolutionsverfahren ermittelt werden. Mit diesen "VorratsVorrats-Referenzfunktionen" wird dann im akuten Fall sofort bei bekannten Flugzustandsbereichen automatisch die jeweils gespeicherte Referenzfunktion zur Kreuzkorrelation verwendet. Dies führt nicht nur zu einer erheblichen Reduzierung der Anzahl zuziehender Zufallswerte, sondern auch zu einer wesentlichen Einsparung des Rechenaufwandes. Die Mittelwerte der vier Kenngrößen werden anhand der Ortskurve orientiert (s. Fig. 5) und die Streuungen für die zu ziehenden Zufallswerte werden erheblich verkleinert. Dies führt auch zu einer schnelleren Konvergenz des vorbeschriebenen Evolutionsverfahrens und führt ebenfalls zu einer weiteren Einsparung des Rechenaufwandes.

Da das beschriebene Verfahren die winkelabhängigen Abweichungen der vier Kenngrößen besonders empfindlich im Bereich größerer Drehwinkelablagen vom gewählten Prüfpunkt ermittelt, wird vorgeschlagen im gegebenen Fall das beschriebene Verfahren in vier Sektoren, die etwa 90° voneinander verschoben sind, zu wiederholen.

## Patentansprüche

1. Verfahren für ein Radarsystem mit synthetischer Apertur auf der Basis rotierender Antennen, ROSAR, mit einem Sender, einem Empfänger sowie Antennen zum Senden und Empfangen von Radarsignalen, das pulsfrequent oder kontinuierlich auf der Basis von Pseudorauschsigalen betrieben wird, **dadurch gekennzeichnet, dass** zur Erzielung einer Selbstfokussion und zur Ermittlung der Referenzfunktion mit den vier winkelabhängigen ROSAR-Kenngrößen - Länge des Rotorblatts (L), Kreisfrequenz des Rotorblatts ($\omega_0$), Entfernung ($R_{GO}$) vom Drehpunkt des Rotors zum Objekt und Höhe des Rotorblatts über dem Boden ($H_0$) - das an sich bekannte "Rechenberg'sche Optimierungsverfahren" auf das technische Optimierungsverfahren des ROSAR-Systems übertragen wird, wobei in einem ersten Verfahrensschritt das aus einem Kreisring stammende Empfangssignal mit der Referenzfunktion der idealen Kreisbewegung kreuzkorreliert wird, die daraus erhaltene Ergebnisfunktion auf ein Maximum abgesucht und dessen Breite bestimmt wird, in einem zweiten Verfahrensschritt die Referenzfunktion neu berechnet wird und zwar aus den für jeden Abtastwert nach dem "Rechenberg'schen Verfahren" neu berechneten vier winkelabhängigen Kenngrößen, wobei für jeden Abtastwinkel und für jede Kenngröße Zufallswerte aus einer Wahrscheinlichkeitsverteilung mit vorgegebenem Mittelwerten ($\mu$) und Streuungen ($\sigma$) verwendet werden, in einem dritten Verfahrensschritt erneut die Zufallswerte für alle Abtastpunkte für die vier ROSAR-Kenngrößen ausgewählt werden, wobei für den jeweiligen Mittelwert der aus dem vorhergehenden Verfahrensschritt ermittelte Zufallswert eingesetzt wird, und gegebenenfalls in einem vierten Verfahrensschritt die im Verfahrensschritt 3 ermittelten Abtastwerte als Mittelwerte eingesetzt werden.

2. Verfahren nach Anspruch 1, **dadurch gekenn-**

zeichnet, dass als Prüfkriterium in der Ergebnisfunktion das Maximum mit der geringsten Breite verwendet wird, und dass die Streuung für die Zufallswerte in Abhängigkeit des erreichten Erfolgs, nämlich der Vergrößerung des Höhen-Breitenverhältnisses des ausgewählten Maximums der Ergebnisfunktion gewählt wird.

3. Verfahren nach Anspruch 1 oder 2, **dadurch gekennzeichnet, daß** als Prüfgröße das Höhen-Breitenverhältnis herangezogen wird.

4. Einrichtung zur Durchführung eines Verfahrens nach einem der vorangehenden Ansprüche, **dadurch gekennzeichnet, dass** die Sendeantenne fest am Hubschrauberrumpf integriert ist und nur die Empfangsantenne an der Spitze des Hubschrauber- Rotorblattes angeordnet und mit einer Transpondereinheit verbunden ist, die das Empfangssignal in ein geeignetes Frequenzband umsetzt und das Signal drahtlos an den rumpffesten Empfänger, der mit einer Korrelatoreinheit mit Ergebnisfunktionsspeicher versehen ist, sendet.

5. Einrichtung nach Anspruch 4, **dadurch gekennzeichnet, daß** die Transpondereinheit als Elektronikkarte ausgebildet ist und/oder mit einer autonomen Energieversorgungseinheit ausgerüstet ist, wobei deren Primärenergie aus der über die Elektronikkarte gleitenden Luftströmung entnommen wird.

6. Einrichtung nach Anspruch 4 oder 5, **dadurch gekennzeichnet, daß** ein oder mehrere Mini-Turbinengeneratorsätze in die durch die Elektronikkarte des Transponders führende Kanäle integriert sind.

7. Einrichtung nach einem der Ansprüche 4 bis 6, **dadurch gekennzeichnet, daß** die Transpondereinheit als flache Elektronikkarte ausgebildet ist.

## Claims

1. Method for a radar system with synthetic aperture based on rotating antennas, ROSAR, having a transmitter, a receiver as well as antennas for transmitting and receiving radar signals, which is operated at a pulse frequency or continuously on the basis of pseudo-random noise signals, **characterized in that**, in order to achieve self-focussing and in order to determine the reference function with the four angle-dependent ROSAR characteristic variables - length of the rotor blade (L), circular frequency of the rotor blade $(\omega_o)$, distance $(R_{GO})$ from the rotation point of the rotor to the object and height of the rotor blade above the ground $(H_o)$- the "Rechenberg optimization method", which is known per se, is transferred to the technical optimization method for the ROSAR system, with, in a first method step, the received signal which originates from one circle ring being cross-correlated with the reference function of the ideal circular movement, the result function which is obtained from this is searched for a maximum and its width is determined, in a second method step, the reference function is recalculated, to be precise from the four angle-dependent characteristic variables which -are recalculated using the "Rechenberg method" for each sample value, with random values from a probability distribution with predetermined mean values $(\mu)$ and scatters $(\sigma)$ being used for each sample angle and for each characteristic variable, in a third method step, the random values for all the sample points once again being selected for the four ROSAR characteristic variables, with the random value determined from the previous method step being used for the respective mean value and, if necessary, the sample values determined in method step 3 being used as mean values in a fourth method step.

2. Method according to Claim 1, **characterized in that** the maximum with the narrowest width is used as the test criterion in the result function, and **in that** the scatter for the random values is chosen as a function of the achieved success, namely the enlargement of the height/width ratio of the selected maximum of the result function.

3. Method according to Claim 1 or 2, **characterized in that** the height/width ratio is used as the test variable.

4. Device for carrying out a method according to one of the preceding claims, **characterized in that** the transmitting antenna is permanently integrated in the helicopter fuselage, and only the receiving antenna is arranged at the tip of the helicopter rotor blade and is connected to a transponder unit, which converts the received signal to a suitable frequency band, and sends the signal without wires to the receiver which is fixed in the fuselage and is provided with a correlation unit with a result function memory.

5. Device according to Claim 4, **characterized in that** the transponder unit is in the form of an electronics board and/or is equipped with an autonomous power supply unit, with its primary power being drawn from the air flow moving over the electronics board.

6. Device according to Claim 4 or 5, **characterized in that** one or more mini turbine generator sets are integrated in the channels which pass through the electronics board for the transponder.

7. Device according to one of Claims 4 to 6, **charac-**

**terized in that** the transponder unit is in the form of a flat electronics board.

## Revendications

1. Procédé pour un système radar pourvu d'une ouverture synthétique sur base d'antennes rotatives, ROSAR, présentant un émetteur, un récepteur ainsi que des antennes pour émettre et recevoir des signaux radar, qui fonctionne par fréquence d'impulsions ou de façon continue sur base de signaux de pseudobruit, **caractérisé en ce que** le "procédé d'optimisation de Rechenberg" connu en soi est transféré sur le procédé d'optimisation technique du système ROSAR afin d'obtenir une autofocalisation et de déterminer la fonction de référence avec les quatre grandeurs caractéristiques ROSAR dépendant de l'angle-longueur de la pale du rotor (L), fréquence angulaire de la pale du rotor ($\omega_0$), éloignement ($R_{GO}$) du centre fixe du rotor par rapport à l'objet, et hauteur de la pale du rotor au-dessus du sol ($H_0$) -, procédé dans lequel dans une première étape de procédé on intercorrèle le signal de réception provenant d'un anneau circulaire avec la fonction de référence du mouvement circulaire idéal, on recherche un maximum de la fonction résultante ainsi obtenue et détermine sa largeur, dans une deuxième étape de procédé, on calcule à nouveau la fonction de référence c'est-à-dire à partir des quatre grandeurs caractéristiques dépendant de l'angle, calculées à nouveau pour chaque valeur de balayage selon le "procédé de Rechenberg", des valeurs aléatoires provenant d'une distribution de probabilités avec des valeurs moyennes prédéterminées ($\mu$) et des dispersions ($\sigma$) étant utilisées pour chaque angle de balayage et pour chaque grandeur caractéristique, dans une troisième étape de procédé, on sélectionne à nouveau les valeurs aléatoires pour tous les points de balayage pour les quatre valeurs caractéristiques ROSAR, la valeur aléatoire déterminée à partir de l'étape de procédé précédente étant utilisée pour chaque valeur moyenne, et éventuellement dans une quatrième étape de procédé on utilise les valeurs de balayage déterminées dans l'étape de procédé 3 comme valeurs moyennes.

2. Procédé selon la revendication 1, **caractérisé en ce qu'**on utilise comme critère de test dans la fonction résultante le maximum présentant la largeur la plus réduite et **en ce qu'**on sélectionne la dispersion pour les valeurs aléatoires en fonction du résultat obtenu, c'est-à-dire de l'augmentation du rapport hauteur sur largeur du maximum sélectionné de la fonction résultante.

3. Procédé selon la revendication 1 ou 2, **caractérisé** en ce qu'on se sert du rapport hauteur sur largeur comme grandeur de test.

4. Dispositif pour la réalisation d'un procédé selon l'une quelconque des revendications précédentes, **caractérisé en ce que** l'antenne émettrice est intégrée fermement sur le fuselage de l'hélicoptère et uniquement l'antenne réceptrice est disposée au sommet de la pale de rotor d'hélicoptère et connectée à une unité à transpondeur qui convertit le signal de réception en une bande de fréquences appropriée et émet le signal sans fil au récepteur fixe sur le fuselage, qui est muni d'une unité de corrélation présentant une mémoire de fonction résultante.

5. Dispositif selon la revendication 4, **caractérisé en ce que** l'unité à transpondeur est conçue comme une carte électronique et/ou est équipée d'une unité autonome d'alimentation en énergie dans laquelle son énergie primaire est prélevée à partir de l'écoulement d'air glissant sur la carte électronique.

6. Dispositif selon la revendication 4 ou 5 **caractérisé en ce qu'**un ou plusieurs jeux de mini-turbogénérateurs sont intégrés dans les canaux menant à travers la carte électronique du transpondeur.

7. Dispositif selon l'une quelconque des revendications 4 à 6, **caractérisé en ce que** l'unité à transpondeur est conçue comme une carte électronique plate.

Fig.6 Geometrie zur Berechnung der Klausingschen ROSAR - Referenzfunktion, (A ist die Winkelposition des antennentragenden Rotorblatts )

Fig.1

Fig.2 Empfangssignalabtastung und Verteilung auf die Entfernungsringspeicher und ihre Speicherplätze.

Fig.3 Korrelatoranordnung und 1. Schritt des SFR

Fig.4 Veranschaulichung des Vorgehens zum Auffinden des Prüfkriteriums

Fig.5 Typische Ortskurve der Abweichung einer Blattspitzenbewegung von einer idealen Kreisbahn